# EUROPEAN PATENT SPECIFICATION

(11) **EP 3 416 055 B1**
(45) Date of publication and mention of the grant of the patent: **27.05.2026**
(21) Application number: 18177545.3
(22) Date of filing: 13.06.2018
(51) Int. Cl.: G06F 9/451, G06F 8/38, G06F 40/143

(54) **METHOD, DEVICE, ELECTRIC DEVICE AND COMPUTER-READABLE STORAGE MEDIUM FOR UPDATING PAGE**
VERFAHREN, VORRICHTUNG, ELEKTRISCHE VORRICHTUNG UND COMPUTERLESBARES SPEICHERMEDIUM ZUR AKTUALISIERUNG EINER SEITE
PROCÉDÉ, DISPOSITIF, DISPOSITIF ÉLECTRIQUE ET SUPPORT D'INFORMATIONS LISIBLE PAR ORDINATEUR POUR LA MISE À JOUR DE PAGES

(30) Priority: 14.06.2017 CN 201710449156
(43) Date of publication of application: 19.12.2018
(73) Proprietor: Beijing Xiaomi Mobile Software Co., Ltd., Beijing 100085 (CN)
(72) Inventor: GUO, Bin, Beijing, Beijing 100085 (CN); WU, Hua, Beijing, Beijing 100085 (CN)
(74) Representative: dompatent

(56) References cited:
- US-A1- 2016 162 597

## Description

### TECHNICAL FIELD

The present disclosure generally relates to the field of terminal technology, and more particularly, to a method, a device, an electric device, a non-transitory computer-readable storage medium and a program product for updating a page.

### BACKGROUND

When contents of a page are updated, an electric device may need to update all elements in the page for displaying an updated page.

However, such an update creates some issues. For example, if the data volume to be updated is large, and after a refresh operation to a page is executed by a user, it will take a long period of time to update all elements in the page completely. Sometimes, it may take 3 seconds. While the page is being updated, none of changes in the page can be observed by the user even after the page is changed as a whole.

Accordingly, it is required for the user to wait for a certain period of time after the execution of the refresh operation before, the change of the page can be observed. This delay results in a significant lag and a poor viewing experience.

US 2016/162597 A1 discloses a method for progressively updating a web page by dividing the page into tiles, where each tile can be re-drawn independently as data changes, allowing the page to be displayed incrementally.

### SUMMARY

The invention is defined by the independent claims. The dependent claims define preferred embodiments. Examples of the present disclosure provide a method, a device, an electric device, a non-transitory computer-readable storage medium and a grogram product for updating a page.

The technical solutions provided by examples of the present disclosure may have the following beneficial effects.

It can be seen from the above embodiments that the data to be updated is divided into N sets of sub-data and each set of sub-data is updated, so that the data to be updated is allowed to be updated in multiple times, i.e., it is not necessary to update the data to be updated all at once, thus shortening a time interval for each update, so that a displayer of an electric device is able to display an updated page in several times and an time interval for each displaying of the updated page is much shorter than that between page refreshing and completely updating of the data to be updated, thereby ensuring that the user is able to view the change of the page continually, and reducing a lag at watching after the page is refreshed by the user.

### BRIEF DESCRIPTION OF THE DRAWINGS

The accompanying drawings, which are incorporated in and constitute a part of this specification, illustrate examples consistent with the present disclosure and, together with the description, serve to explain the principles of the present disclosure.
Fig. 1 is a flow chart showing a method for updating a page, according to an example.
Fig. 2 is a flow chart showing another method for updating a page, according to an example.
Fig. 3 is a flow chart showing still another method for updating a page, according to an example.
Fig. 4 is a flow chart showing still another method for updating a page, according to an example.
Fig. 5 is a flow chart showing still another method for updating a page, according to an example.
Fig. 6 is a flow chart showing still another method for updating a page, according to an example.
Fig. 7 is a flow chart showing still another method for updating a page, according to an example.
Fig. 8 is a block diagram illustrating a device for updating a page, according to an example.
Fig. 9 is a block diagram illustrating another device for updating a page, according to an example.
Fig. 10 is a block diagram illustrating still another device for updating a page, according to an example.
Fig. 11 is a block diagram illustrating still another device for updating a page, according to an example.
Fig. 12 is a block diagram illustrating still another device for updating a page, according to an example.
Fig. 13 is a block diagram illustrating still another device for updating a page, according to an example.
Fig. 14 is a block diagram illustrating still another device for updating a page, according to an example.
Fig. 15 is a block diagram illustrating a device for refreshing a page, according to an example.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various examples of the present disclosure. Also, common but well-understood elements that are useful or necessary in a commercially feasible example are often not depicted in order to facilitate a less obstructed view of these various examples. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above, except where different specific meanings have otherwise been set forth herein.

### DETAILED DESCRIPTION

Detailed description of the example will be made herein, with examples thereof to be shown in drawings. In the following descriptions, when the drawings are referred to, unless expressed otherwise, the same number in different drawings refers to the same or similar elements. The examples described in the examples as below do not represent all examples that are consistent with the present disclosure. On the contrary, they are only examples of the devices and the methods that are consistent with some aspects of the present disclosure as recited in the claims.

The terminology used in the present disclosure is for the purpose of describing exemplary examples only and is not intended to limit the present disclosure. As used in the present disclosure and the appended claims, the singular forms "a", "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first", "second", "third" and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to" depending on the context.

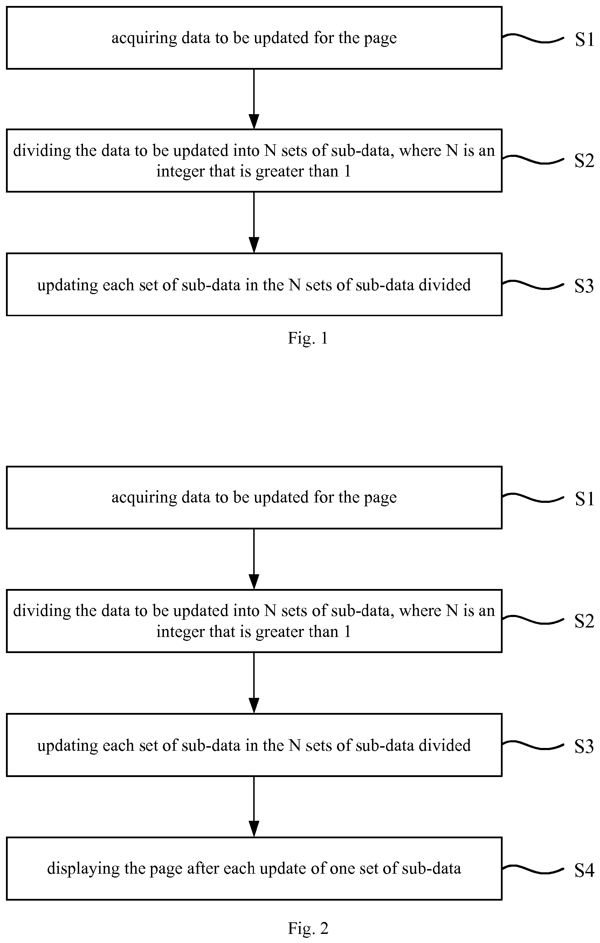

Fig. 1 is the flow chart of a method for updating a page according to an example, which is suitable for an electric device such as a mobile phone, a tablet computer and so on. Referring to Fig. 1, the method includes steps as follows.

In step S1, data to be updated for the page is acquired.

In an example, the step S1 can be performed when an instruction of updating a page is received, in which the instruction of updating the page can be generated by either clicking a refresh bottom in the page, or performing an operation such as page turning, page switching, and so on.

In an example, the page may be a static page, for example, a page of an electric book, a web page and so on. In another example, the page may be a dynamic page, for example, an animate browser window of a web page.

For the static page, when an updated page is displayed not until all elements in the page have been updated, the user will not observe any change of the page during the updating, thus resulting in a significant lag if the period of time to update is long.

For the dynamic page, when an updated page is displayed not until all elements in the page have been updated, if the updating takes a long period of time, such as 4 frames, the pages viewed at the 1th frame, at the 2th frame and the 3th frame respectively are the same as the page before updating, thus resulting in a significant lag.

The examples of the present disclosure are illustrated below mainly regarding the static page, and it should be understood that, as to the dynamic page, same beneficial effects can be achieved by the skilled in the art according to the examples of the present disclosure.

In step S2, the data to be updated is divided into N sets of sub-data, where N is an integer that greater than 1.

In an example, the number of sets of sub-data may be determined according to a division rule predetermined, for example, the data to be updated is divided into fixed sets of sub-data, in which the number of the sets of sub-data is determined according to demands.

In an example, the number of sets of sub-data can be determined according to time required for completely updating the data to be updated by an electric device, for example, the data to be updated is divided into first sets of sub-data when the time is longer than a first predetermined time length, while the data to be updated is divided into second sets of sub-data when the time is shorter than or equal to the first predetermined time length, in which the number of the first sets is greater than that of the second sets.

When it takes long time to completely update all data to be updated, the data to be updated can be divided into the greater number of sets, so that the user is able to view the updating of a partial page continually during the whole period of updating the page completely, thus decreasing the lag after the page is refreshed by the user.

When it takes short time to completely update all the data to be updated, the data to be updated is divided into the fewer number of sets, thus decreasing frequency of the updating while guaranteeing that the user is able to view the updating of a partial page continually, and further decreasing memory consumption of the electric device.

In an example, for the dynastic page, the data to be updated is divided according to a data volume which is allowed to be updated within one frame by the electric device, so as to contribute to updating the page, thus ensuring that contents in the dynastic page in each frame are changed, therefore decreasing the lag at watching.

Sometimes, for the simplicity, the data to be updated may be divided into a fixed number N sets of sub-data. N may be a predetermined number that may be set by a user. N may also be a default value that is set by a system program.

In step S3, each set of sub-data in the N sets of sub-data divided is updated.

During execution, each set of sub-data is updated according to an update order of the N sets of sub-data divided in the page.

In an example, one set or n sets of sub-data may be updated at each update, in which n is an integer that is less than N, and specific number of sets can be determined according on demands.

In some examples, the update order is determined according to attribute information of each set of sub-data, for example, a set of sub-data including a root node may be updated first, followed by one or more rest sets of sub-data; alternatively, one or more sets of sub-data corresponding to a display interface of the electric device may be updated first, followed by one or more rest sets of sub-data. It should be noted that the update order is not limited to the above cases, and the specific update order can be determined according to demands.

In an example, the data to be updated is divided into N sets of sub-data, and each set of sub-data is updated according to an update order, so that the data to be updated is allowed to be updated in multiple times, i.e., it is not necessary to update the data to be updated all at once, thus shortening a time interval for each update, so that a displayer of an electric device is able to display an updated page in several times and an time interval for each displaying of the updated page is much shorter than that between page refreshing and completely updating of the data to be updated, thereby ensuring that the user is able to view the change of the page continually, and reducing a lag at watching after the page is refreshed by the user.

Fig. 2 is the flow chart showing another method for updating a page, according to an example. Referring to Fig. 2, based on the example of Fig.1, the method further includes a step S4.

In the step S4, the page is displayed after each update of one set of sub-data.

In an example, the page is displayed after each update of one set of sub-data, thus minimizing the time interval for displaying the updated page after each update, and ensuring that the user is able to view the change of the page more continually, thereby, to a greater extent, reducing the lag at watching after the page is refreshed by the user.

In an example, for the static page, the updated page is displayed after each update of one set of sub-data, no matter how long it will take for updating. In another example, for the dynamic page, after one set of sub-data is updated in one frame, the updated page is displayed in the page in the next frame.

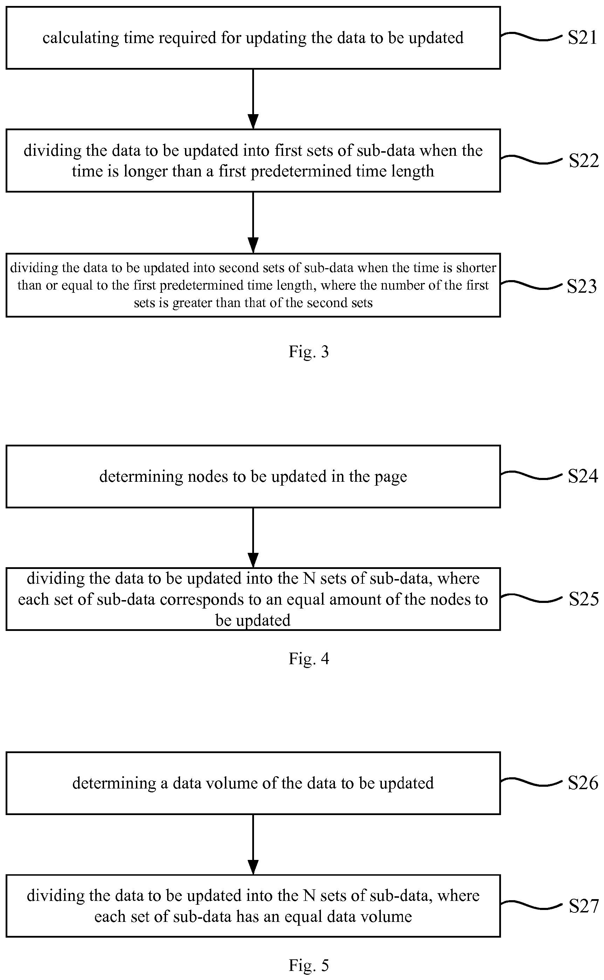

Fig. 3 is the flow chart showing another method for updating a page, according to an example. Referring to Fig. 3, based on the example of Fig.1, dividing the data to be updated into N sets of sub-data includes steps S21 to S23 as follows.

In the step S21, time required for updating the data to be updated is calculated.

In the step S22, the data to be updated is divided into first sets of sub-data when the time is longer than a first predetermined time length.

In the step S23, the data to be updated is divided into second sets of sub-data when the time is shorter than or equal to the first predetermined time length.

The number of the first sets is greater than that of the second sets.

In an example, the number of sets of sub-data may be determined according to time required for completely updating the data to be updated by an electric device. Specifically, the data to be updated is divided into first sets of sub-data when the time is longer than a first predetermined time length (which can be set according to demands); and the data to be updated is divided into second sets of sub-data when the time is shorter than or equal to the first predetermined time length, in which the number of the first sets is greater than that of the second sets.

When it takes long time to completely update all data to be updated, the data to be updated can be divided into the greater number of sets, so that the user is able to view the updating of a partial page continually during the whole period of updating the page completely, thus reducing the lag at watching after page refresh.

When it takes short time to completely update all the data to be updated, the data to be updated is divided into the fewer number of sets, thus decreasing frequency of the updating while guaranteeing that the user is able to view the updating of a partial page continually, and further decreasing memory consumption of the electric device.

In an example, before the data to be updated is divided into multiple sets of sub-data, it may be determined that whether the time required for updating the data to be updated is greater than second predetermined time length, and the data to be updated is divided into the multiple sets of sub-data and the subsequent steps are performed only when the time is longer than the second predetermined time length, in which the second predetermined time length may be less than the first predetermined time length.

That is, the data to be updated is divided into multiple sets of sub-data only when it takes relative long time to update the data to be updated. However, when it takes relative short time to update the data to be updated, i.e., the user is able to view fluently after page refreshing, all the data to be updated is updated directly, and the updated page is displayed after all the data to be updated have been updated, thus avoiding memory consumption of the electric device caused by division of the data to be updated.

Fig. 4 is the flow chart showing another method for updating a page, according to an example. Referring to Fig. 4, based on the example of Fig.1, dividing the data to be updated into multiple sets of sub-data includes the following steps S24 and S25.

In the step S24, nodes to be updated in the page are determined.

In the step S25, the data to be updated is divided into N sets of sub-data, and each set of sub-data corresponds to an equal amount of the nodes to be updated.

In an example, the page updating mainly involves updating nodes which constitute a page. For example, for an Extensible Markup Language (XML) page, a Hyper Text Markup Language (HTML) page, the page updating mainly involves updating nodes of a Document Object Model (DOM). The data to be updated is divided into multiple sets of sub-data, with each set of sub-data corresponding to an equal amount of the nodes to be updated, so that data corresponding to an equal amount of the nodes to be updated at each update of one set of sub-data, thus, to some extent, ensuring that occupied memory required for each update is of a similar volume, thereby avoiding the memory from being altered frequently.

Fig. 5 is the flow chart showing another method for updating a page, according to an example. Referring to Fig. 5, based on the example of Fig.1, dividing the data to be updated into N sets of sub-data includes steps S26 and S27 as follows.

In the step S26, a data volume of the data to be updated is determined.

In the step S27, the data to be updated is divided into the N sets of sub-data, and each set of sub-data is of an equal data volume.

In an example, based on the example of Fig.4, because the data volume of the data to be updated for each node is different, it is not necessarily to guarantee the same data volume for each set of sub-data by dividing the data to be updated into the multiple sets of sub-data, with each set of sub-data corresponding to an equal amount of the nodes to be updated, thus it also cannot ensure that occupied memory required for each update is same. Therefore, the data to be updated can be divided into multiple sets of sub-data, in which each set is of an equal data volume, thus ensuring that data in an equal data volume is updated at each update of one set of sub-data, thereby, to some extent, ensuring that occupied memory required for each update is same, and avoiding the memory from being altered frequently.

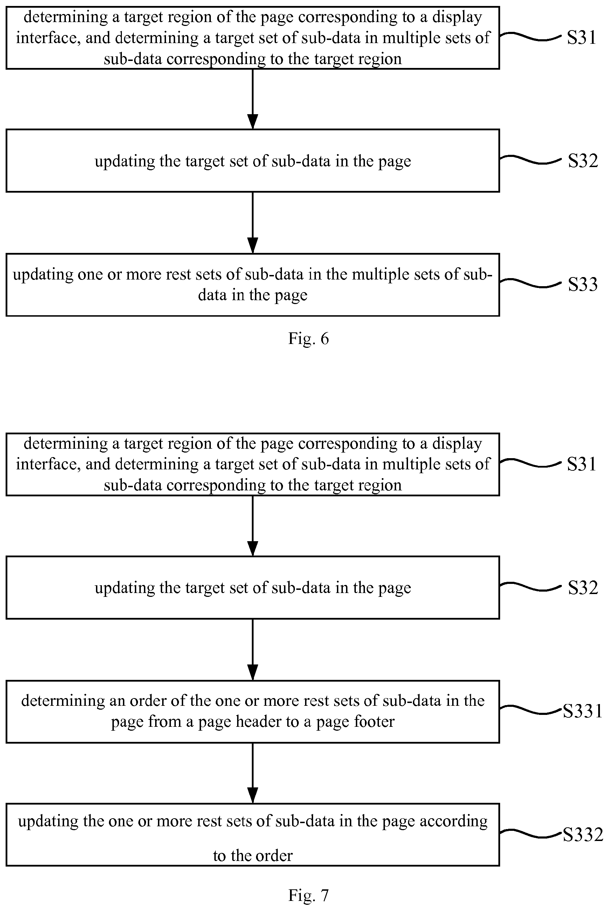

Fig. 6 is the flow chart showing another method for updating a page, according to an example. Referring to Fig. 6, based on the example of Fig.1, updating each set of sub-data according to an update order of the N sets of sub-data divided in the page includes steps S31 to S33 as follows.

In the step S31, a target region of the page corresponding to a display interface is determined, and a target set of sub-data in multiple sets of sub-data corresponding to the target region is determined.

In the step S32, the target set of sub-data is updated in the page.

In the step S33, one or more rest sets of sub-data in the multiple sets of sub-data are updated in the page.

The one or more rest sets of sub-data refer to other sets of sub-data in the multiple sets of sub-data except for the target set of sub-data.

In an example, some pages having a relative large size cannot be displayed in the display interface completely because of a limited size of the display interface of the electric device, i.e., only a partial region of the page can be displayed in the display interface, and a rest region of the page needs to be dragged or zoomed out to be seen in the display interface.

In the case described above, at each update of one set of sub-data, a target region of the page corresponding to the display interface can be predetermined, next a target set of sub-data in multiple sets of sub-data corresponding to the target region is further determined, then a target set of sub-data in multiple sets of sub-data is updated firstly, and one or more rest sets of sub-data in the multiple sets of sub-data are updated thereafter, so as to ensure that the target region corresponding to the display interface which can be seen directly by the user can be updated firstly, so that the user is able to view the change of the page more quickly, thereby further decreasing the lag at watching after page refreshing.

Fig. 7 is the flow chart showing another method for updating a page, according to an example. Referring to Fig. 7, based on the example of Fig.6, updating each set of sub-data according to an update order of in the N sets of sub-data divided in the page includes steps S331 and S332 as follows.

In the step S331, an order of the one or more rest sets of sub-data in the page from a page header to a page footer are determined.

In the step S332, the one or more rest sets of sub-data in the page are updated according to the order.

The page will be changed as a whole after an instruction of updating is received; while in addition to the partial page displayed in the display interface which is viewed with priority, the user generally views the updated page according to an order from the page header to the page footer. Accordingly, in an example, the one or more rest sets of sub-data may be updated according to the order of the one or more rest sets of sub-data in the page, for example, the sub-data in the page can be updated sequentially according to the order from the page header to the page footer, thus ensuring that the sub-date corresponding to the page header which may be seen by the user at first is updated with priority, and further ensuring fluency at watching after the page is refreshed by the user.

Corresponding to the examples of the method for updating a page described above, the present disclosure further provides examples of a device for updating a page.

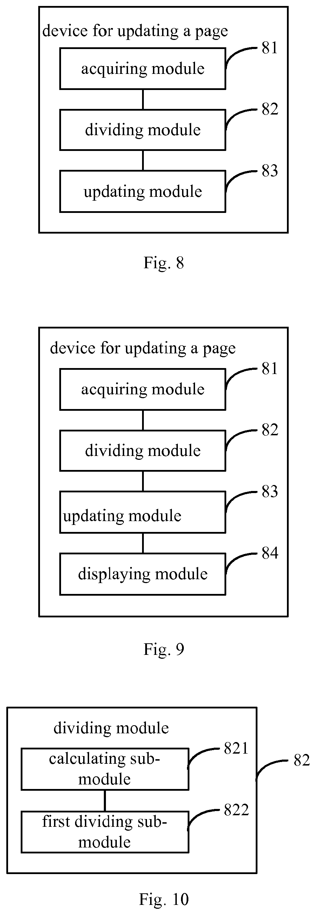

Fig. 8 is the block diagram illustrating a device for updating a page, according to an example. Referring to Fig. 8, the device includes an acquiring module 81, a dividing module 82 and an updating module 83.

The acquiring module 81 is configured to acquire data to be updated for the page.

The dividing module 82 is configured to divide the data to be updated into N sets of sub-data, where N is an integer that is greater than 1.

The updating module 83 is configured to update each set of sub-data in the N sets of sub-data divided.

Fig. 9 is the block diagram illustrating another device for updating a page, according to an example. Referring to Fig. 9, based on the example of Fig. 8, the device further includes a displaying module 84.

The displaying module 84 is configured to display an updated page after each update of one set of sub-data.

Fig. 10 is the block diagram illustrating another device for updating a page, according to an example. Referring to Fig. 10, based on the example of Fig. 8, the dividing module 82 includes a calculating sub-module 821 and a first dividing sub-module 822.

The calculating sub-module 821 is configured to calculate time required for updating the data to be updated.

The first dividing sub-module 822 is configured to divide the data to be updated into first sets of sub-data when the time is longer than first predetermined time length; and to divide the data to be updated into second sets of sub-data when the time is shorter than or equal to the first predetermined time length.

The number of the first sets is greater than that of the second sets.

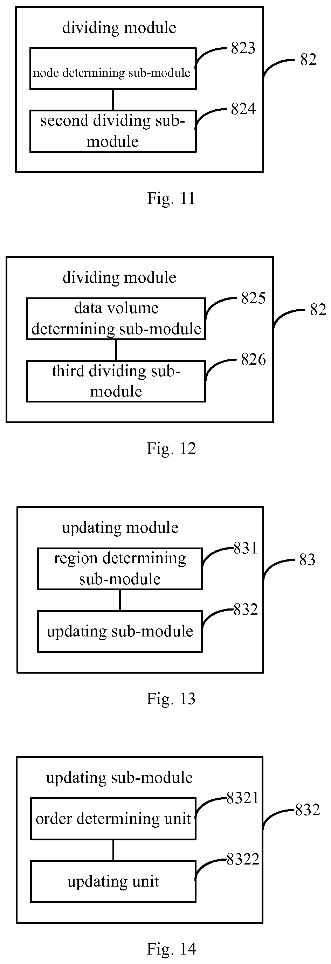

Fig. 11 is the block diagram illustrating still another device for updating a page, according to an example. Referring to Fig. 11, based on the example of Fig. 8, the dividing module 82 includes a node determining sub-module 823 and a second dividing sub-module 824.

The node determining sub-module 823 is configured to determine nodes to be updated in the page.

The second dividing sub-module 824 is configured to divide the data to be updated into the N sets of sub-data, with each set of sub-data corresponding to an equal amount of the nodes to be updated.

Fig. 12 is the block diagram illustrating still another device for updating a page, according to an example. Referring to Fig. 12, based on the example of Fig. 8, the dividing module 82 includes a data volume determining sub-module 825 and a third dividing sub-module 826.

The data volume determining sub-module 825 is configured to determine a data volume of the data to be updated.

The third dividing sub-module 826 is configured to divide the data to be updated into the N sets of sub-data, with each set of sub-data having an equal data volume.

Fig. 13 is the block diagram illustrating still another device for updating a page, according to an example. Referring to Fig. 13, based on the example of Fig. 8, the updating module 83 includes a region determining sub-module 831 and an updating sub-module 832.

The region determining sub-module 831 is configured to determine a target region of the page corresponding to a display interface, and to determine a target set of sub-data in multiple sets of sub-data corresponding to the target region.

The updating sub-module 832 is configured to update the target set of sub-data in the page; and then to update one or more rest sets of sub-data in the multiple sets of sub-data in the page.

Fig. 14 is the block diagram illustrating still another device for updating a page, according to an example. Referring to Fig. 14, based on the example of Fig. 13, the updating sub-module 832 includes an order determining unit 8321 and an updating unit 8322.

The order determining unit 8321 is configured to determine an order of the one or more rest sets of sub-data in the page from a page header to a page footer.

The updating unit 8322 is configured to update the one or more rest sets of sub-data in the page according to the order.

With respect to the devices in the above examples, the specific manners for performing operations for individual modules and units therein have been described in detail in the examples regarding the methods for updating a page, which will not be elaborated herein.

With respect to examples of the devices, since they substantially correspond to the examples of the methods, reference is made to the partial description of the examples of the methods. The examples of the devices described above are merely illustrative, in which the modules described as separate components may or may not be physically separate, and the components shown as modules may or may not be physical modules, i.e., the components can be located in one place, or can be distributed to multiple network modules. Part or all of the modules may be selected according to the actual needs to achieve the purpose of the present disclosure. Those skilled in the art will understand and practice without paying creative work.

Correspondingly, there is also provided a device for updating a page, including:
a processor; and
a memory for storing instructions executable by the processor,
in which the processor is configured to:
   acquire data to be updated for a page;
   divide the data to be updated into N sets of sub-data, wherein N is an integer that is greater than 1; and
   update each set of sub-data according to an update order of the N sets of sub-data divided in the page.

Correspondingly, there is also provided a terminal, including a memory; and one or more programs, in which the one or more programs are stored in the memory, and configured to include instructions performing a method for updating a page when executed by a processor, the method includes:
acquiring data to be updated for the page;
dividing the data to be updated into N sets of sub-data, wherein N is an integer that is greater than 1; and
updating each set of sub-data according to an update order of the N sets of sub-data divided in the page.

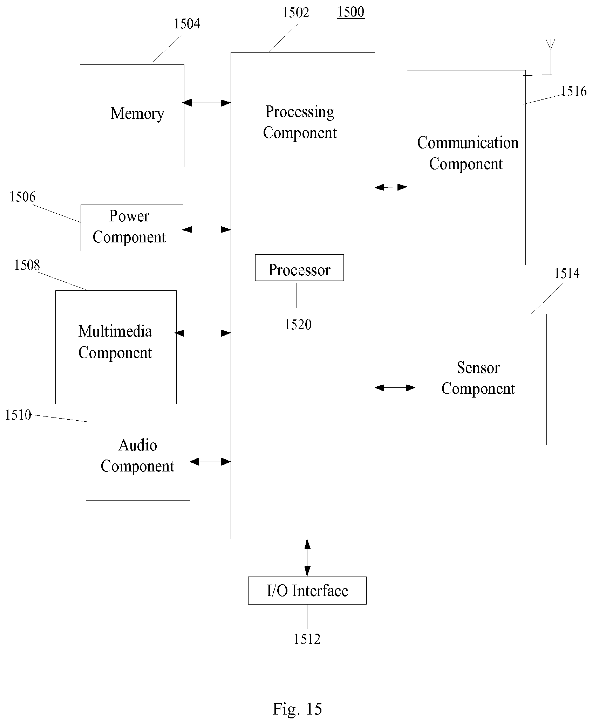

Fig. 15 is the block diagram illustrating a page refreshing device 1500, according to an example. For example, the device 1500 may be a mobile phone, a computer, a digital broadcasting terminal, a messaging device, a game console, a tablet device, fitness equipment, a medical device, a Personal Digital Assistant, etc.

Referring to Fig. 15, the device 1500 may include the following one or more components: a processing component 1502, a memory 1504, a power component 1506, a multimedia component 1508, an audio component 1510, an Input/Output (I/O) interface 1512, a sensor component 1514, and a communication component 1516.

The processing component 1502 typically controls overall operations of the device 1500, such as the operations associated with display, telephone calls, data communications, camera, and record. The processing component 1502 may include one or more processors 1520 to execute instructions to perform all or part of the steps in the above described methods. Moreover, the processing component 1502 may include one or more modules which facilitate(s) the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some examples, the multimedia component 1508 includes a front camera and/or a rear camera. The front camera and/or the rear camera may receive external multimedia data while the device 1500 is in an operation mode, such as a photographing mode and a video mode. Each of the front camera and the rear camera may be a fixed optical lens system or have focus and optical zoom capability.

The audio component 1510 is configured to output and/or input audio signals. For example, the audio component 1510 includes a microphone (MIC) configured to receive an external audio signal when the device 1500 is in an operation mode, such as a call mode, a recording mode, and a voice recognition mode. The received audio signal may be further stored in the memory 1504 or transmitted via the communication component 1516. In some examples, the audio component 1510 further includes a speaker to output audio signals.

The I/O interface 1512 provides an interface for the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500 and relative positioning of components (e.g. the display and the keypad of the device 1500). The sensor component 1514 may also detect a change in position of the device 1500 or of a component in the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS (Complementary Metal-Oxide-Semiconductor) or CCD (Charge-coupled Device) image sensor, for use in imaging applications. In some examples, the sensor component 1514 may also include an accelerometer sensor, a gyroscope sensor, a magnetic sensor, a pressure sensor, or a temperature sensor.

The communication component 1516 is configured to facilitate wired or wireless communication between the device 1500 and other devices. The device 1500 can access a wireless network based on a communication standard, such as WIFI, 2G, or 3G, or a combination thereof. In one example, the communication component 1516 receives a broadcast signal or broadcast associated information from an external broadcast management system via a broadcast channel. In one example, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In examples, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In examples, there is also provided a non-transitory computer readable storage medium including instructions, such as the memory 1504 including instructions. The above instructions are executable by the processor 1520 in the device 1500, for performing the above-described methods. For example, the non-transitory computer-readable storage medium may be a ROM, a random access memory (RAM), a CD-ROM, a magnetic tape, a floppy disc, an optical data storage device, and the like.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module", "sub-module", "circuit", "sub-circuit", "circuitry", "sub-circuitry", "unit" or "sub-unit" may include memory (shared, dedicated, or group) that stores code or instructions that can be executed by one or more processors.

## Claims

1. A method for updating a web page displayed on an electric device, comprising:
acquiring (S1) data to be updated for the web page, wherein the web page comprises a plurality of nodes of a document object model, DOM, and the data to be updated is corresponding to the nodes to be updated in the web page, wherein the plurality of nodes include a root node;
dividing (S2) the data to be updated into N sets of sub-data, wherein N is an integer that is greater than 1 and each set of sub-data has an equal data volume;
updating (S3) each set of sub-data in the N sets of sub-data divided until the data acquired for the web page is updated, wherein a set of sub-data comprising the root node is updated first, an order of the one or more rest sets of sub-data is determined from a page header to a page footer, and the one or more rest sets of sub-data is updated according to the order; and
displaying (S4) the web page after each update of one set of sub-data.

2. The method of claim 1, wherein dividing the data to be updated into N sets of sub-data comprises:
calculating (S21) time required for updating the data to be updated;
dividing (S22) the data to be updated into first sets of sub-data when the time is longer than a first predetermined time length; and
dividing (S23) the data to be updated into second sets of sub-data when the time is shorter than or equal to the first predetermined time length,
wherein the number of the first sets is greater than that of the second sets.

3. A device for updating a web page displayed on an electric device, comprising:
an acquiring module (81), configured to acquire data to be updated for the web page, wherein the web page comprises a plurality of nodes of a document object model, DOM, and the data to be updated is corresponding to the nodes to be updated in the web page, wherein the plurality of nodes include a root node;
a dividing module (82), configured to divide the data to be updated into N sets of sub-data, wherein N is an integer that is greater than 1 and each set of sub-data has an equal data volume;
an updating module (83), configured to update each set of sub-data in the N sets of sub-data divided until the data acquired for the web page is updated, wherein a set of sub-data comprising the root node is updated first, an order of the one or more rest sets of sub-data is determined from a page header to a page footer, and the one or more rest sets of sub-data is updated according to the order; and
a displaying module (84), configured to display the web page after each update of one set of sub-data.

4. The device of claim 3, wherein the dividing module comprises:
a calculating sub-module (821), configured to calculate time required for updating the data to be updated;
a first dividing sub-module (822), configured to divide the data to be updated into first sets of sub-data when the time is longer than a first predetermined time length; and to divide the data to be updated into second sets of sub-data when the time is shorter than or equal to the first predetermined time length,
wherein the number of the first sets is greater than that of the second sets.

5. A non-transitory computer-readable storage medium having stored therein computer programs that, when executed by a processor (1520), causes the processor to perform a method for updating a web page displayed on an electric device according to claim 1 or 2.

6. A program product having stored therein instructions that, when executed by one or more processors (1520) of an apparatus, causes the apparatus to perform a method for updating a web page displayed on an electric device according to claim 1 or 2.

## Patentansprüche

1. Verfahren zum Aktualisieren einer auf einem elektrischen Gerät angezeigten Webseite, umfassend:
Erfassen (S1) von zu aktualisierenden Daten für die Webseite, wobei die Webseite eine Vielzahl von Knoten eines Dokumentenobjektmodells, DOM, aufweist und die zu aktualisierenden Daten den zu aktualisierenden Knoten in der Webseite entsprechen, wobei die Vielzahl der Knoten einen Root-Knoten aufweisen;
Teilen (S2), der zu aktualisierenden Daten in N Sätze von Unterdaten, wobei N eine ganze Zahl ist, die größer als 1 ist, und jeder Satz von Unterdaten ein gleiches Datenvolumen hat;
Aktualisieren (S3) jedes Satzes von Unterdaten in den N Sätzen von geteilten Unterdaten, bis die für die Webseite erfassten Daten aktualisiert sind, wobei ein Set von Unterdaten, die den Root-Knoten umfassen, zuerst aktualisiert wird, eine Reihenfolge des einen oder der mehreren übrigen Sets von Unterdaten bestimmt wird aus einem Page-Header zu einem Page-Footer und das eine oder die mehreren übrigen Sets von Unterdaten gemäß der Reihenfolge aktualisiert werden und
Anzeigen (S4) der Webseite nach jeder Aktualisierung eines Satzes von Unterdaten.

2. Verfahren nach Anspruch 1, wobei das Teilen der zu aktualisierenden Daten in N Sätze von Unterdaten umfasst:
Berechnen (S21) der für die Aktualisierung der zu aktualisierenden Daten erforderlichen Zeit;
Teilen (S22) der zu aktualisierenden Daten in erste Sätze von Unterdaten, wenn die Zeit länger als eine erste vorbestimmte Zeitlänge ist; und
Teilen (S23) der zu aktualisierenden Daten in zweite Sätze von Unterdaten, wenn die Zeit kürzer oder gleich der ersten vorbestimmten Zeitlänge ist; und
wobei die Anzahl der ersten Sätze größer ist als die der zweiten Sätze.

3. Vorrichtung zum Aktualisieren einer auf einem elektrischen Gerät angezeigten Webseite, aufweisend:
ein Erfassungsmodul (81), das so ausgebildet ist, dass es zu aktualisierende Daten für die Webseite zu erfassen, wobei die Webseite eine Vielzahl von Knoten eines Dokumentenobjektmodells, DOM, aufweist und die zu aktualisierenden Daten den zu aktualisierenden Knoten in der Webseite entsprechen, wobei die Vielzahl der Knoten einen Root-Knoten aufweisen;
ein Teilungsmodul (82), das so ausgebildet ist, dass es die zu aktualisierenden Daten in N Sätze von Unterdaten teilt, wobei N eine ganze Zahl ist, die größer als 1 ist, und jeder Satz von Unterdaten ein gleiches Datenvolumen hat;
ein Aktualisierungsmodul (83), das so ausgebildet ist, dass es jeden Satz von Unterdaten in den N Sätzen von geteilten Unterdaten aktualisiert, bis die für die Webseite erfassten Daten aktualisiert sind, wobei ein Set von Unterdaten, die den Root-Knoten umfassen, zuerst aktualisiert wird, eine Reihenfolge des einen oder der mehreren übrigen Sets von Unterdaten bestimmt wird aus einem Page-Header zu einem Page-Footer und das eine oder die mehreren übrigen Sets von Unterdaten gemäß der Reihenfolge aktualisiert werden; und
ein Anzeigemodul (84), das so ausgebildet ist, dass es die Webseite nach jeder Aktualisierung eines Satzes von Unterdaten anzeigt.

4. Vorrichtung nach Anspruch 3, wobei das Teilungsmodul aufweist:
ein Berechnungsuntermodul (821), das so ausgebildet ist, dass es die für die Aktualisierung der zu aktualisierenden Daten erforderliche Zeit berechnet;
ein erstes Teilungsuntermodul (822), das so ausgebildet ist, dass es die zu aktualisierenden Daten in erste Sätze von Unterdaten teilt, wenn die Zeit länger als eine erste vorbestimmte Zeitlänge ist; und dass es die zu aktualisierenden Daten in zweite Sätze von Unterdaten teilt, wenn die Zeit kürzer als oder gleich der ersten vorbestimmten Zeitlänge ist,
wobei die Anzahl der ersten Sätze größer ist als die der zweiten Sätze.

5. Nicht-transitorisches computerlesbares Speichermedium, auf dem Computerprogramme gespeichert sind, die, wenn sie von einem Prozessor (1520) ausgeführt werden, den Prozessor veranlassen, ein Verfahren zum Aktualisieren einer auf einem elektrischen Gerät angezeigten Webseite nach Anspruch 1 oder 2 durchzuführen.

6. Programmprodukt mit darin gespeicherten Anweisungen, die, wenn sie von einem oder mehreren Prozessoren (1520) einer Vorrichtung ausgeführt werden, die Vorrichtung veranlassen, ein Verfahren zum Aktualisieren einer auf einem elektrischen Gerät angezeigten Webseite nach Anspruch 1 oder 2 durchzuführen.

## Revendications

1. Procédé de mise à jour d'une page Web affichée sur un dispositif électrique, comprenant les étapes consistant à :
acquérir (S1) des données à mettre à jour de la page Web, dans lequel la page Web comprend une pluralité de nœuds d'un modèle objet de documents, dit DOM, et les données à mettre à jour correspondent aux nœuds à mettre à jour dans la page Web, dans lequel la pluralité de nœuds comprend un nœud racine ;
diviser (S2) les données à mettre à jour en N ensembles de sous-données, dans lequel N est un nombre entier supérieur à 1 et chaque ensemble de sous-données a un volume de données égal ;
mettre à jour (S3) chaque ensemble de sous-données des N ensembles de sous-données divisés jusqu'à ce que les données acquises de la page Web soient mises à jour, dans lequel un ensemble de sous-données comprenant le nœud racine est mis à jour en premier, un ordre du ou des plusieurs ensembles de sous-données restants est déterminé d'un en-tête de page à un pied de page, et le ou les ensembles de sous-données restants sont mis à jour conformément à l'ordre ; et
afficher (S4) la page Web après chaque mise en jour d'un ensemble de sous-données.

2. Procédé selon la revendication 1, dans lequel l'étape de division des données à mettre à jour en N ensembles de sous-données comprend les étapes consistant à :
calculer (S21) un temps nécessaire pour mettre à jour les données à mettre à jour ;
diviser (S22) les données à mettre à jour en premiers ensembles de sous-données lorsque le temps est supérieur à une première longueur de temps prédéterminée ; et
diviser (S23) les données à mettre à jour en seconds ensembles de sous-données lorsque le temps est inférieur ou égal à la première longueur de temps prédéterminée,
dans lequel le nombre des premiers ensembles est supérieur à celui des seconds ensembles.

3. Dispositif de mise à jour d'une page Web affichée sur un dispositif électrique, comprenant :
un module d'acquisition (81), configuré pour acquérir des données à mettre à jour de la page Web, dans lequel la page Web comprend une pluralité de nœuds d'un modèle objet de documents, dit DOM, et les données à mettre à jour correspondent aux nœuds à mettre à jour dans la page Web, dans lequel la pluralité de nœuds comprend un nœud racine ;
un module de division (82), configuré pour diviser les données à mettre à jour en N ensembles de sous-données, dans lequel N est un nombre entier supérieur à 1 et chaque ensemble de sous-données a un volume de données égal ;
un module de mise à jour (83), configuré pour mettre à jour chaque ensemble de sous-données des N ensembles de sous-données divisés jusqu'à ce que les données acquises de la page Web soient mises à jour, dans lequel un ensemble de sous-données comprenant le nœud racine est mis à jour en premier, un ordre du ou des ensembles de sous-données restants est déterminé d'un en-tête de page à un pied de page, et le ou les ensembles de sous-données restants sont mis à jour conformément à l'ordre ; et
un module d'affichage (84), configuré pour afficher la page Web après chaque mise à jour d'un ensemble de sous-données.

4. Dispositif selon la revendication 3, dans lequel le module de division comprend :
un sous-module de calcul (821), configuré pour calculer un temps nécessaire pour mettre à jour les données à mettre à jour ;
un premier sous-module de division (822), configuré pour diviser les données à mettre à jour en premiers ensembles de sous-données lorsque le temps est supérieur à une première longueur de temps prédéterminée ; et pour diviser les données à mettre à jour en seconds ensembles de sous-données lorsque le temps est inférieur ou égal à la première longueur de temps prédéterminée,
dans lequel le nombre des premiers ensembles est supérieur à celui des seconds ensembles.

5. Support d'informations non transitoire lisible par ordinateur maintenant en son sein des programmes d'ordinateur qui, lorsqu'ils sont exécutés par un processeur (1520), amènent le processeur à mettre en œuvre un procédé de mise à jour d'une page Web affichée sur un dispositif électrique selon la revendication 1 ou la revendication 2.

6. Produit-programme maintenant en son sein des instructions qui, lorsqu'elles sont exécutées par un ou plusieurs processeurs (1520) d'un appareil, amènent l'appareil à mettre en œuvre un procédé de mise à jour d'une page Web affichée sur un dispositif électrique selon la revendication 1 ou la revendication 2.
